(19) Europäisches Patentamt / European Patent Office / Office européen des brevets

(11) **EP 3 505 567 A1**

(12) **EUROPEAN PATENT APPLICATION**
published in accordance with Art. 153(4) EPC

(43) Date of publication:
**03.07.2019 Bulletin 2019/27**

(21) Application number: **17856184.1**

(22) Date of filing: **27.09.2017**

(51) Int Cl.:
*C08L 27/12* (2006.01)  *C08K 3/40* (2006.01)
*C08K 7/00* (2006.01)  *C08K 9/02* (2006.01)

(86) International application number:
**PCT/JP2017/034881**

(87) International publication number:
**WO 2018/062235 (05.04.2018 Gazette 2018/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **27.09.2016 JP 2016188546**
**24.10.2016 JP 2016208154**

(71) Applicant: **Daikin Industries, Ltd.**
**Osaka-shi, Osaka 530-8323 (JP)**

(72) Inventors:
• **SHIGETA, Masato**
  **Himeji-shi**
  **Hyogo 670-0966 (JP)**
• **KAMBE, Yuki**
  **Himeji-shi**
  **Hyogo 670-0966 (JP)**
• **KITAGAWA, Michiko**
  **Osaka-Shi**
  **Osaka 530-8323 (JP)**
• **KISHINE, Mitsuru**
  **Osaka-Shi**
  **Osaka 530-8323 (JP)**
• **MIYOSHI, Natsue**
  **Osaka-Shi**
  **Osaka 530-8323 (JP)**
• **NISHIMURA, Hiroshi**
  **Osaka-Shi**
  **Osaka 530-8323 (JP)**

(74) Representative: **Hoffmann Eitle**
**Patent- und Rechtsanwälte PartmbB**
**Arabellastraße 30**
**81925 München (DE)**

(54) **FLUORORUBBER MOLDED ARTICLE**

(57) The invention provides a fluoroelastomer molded article having luster and low odor permeation. The fluoroelastomer molded article contains a fluoroelastomer and has luster.

**Description**

TECHNICAL FIELD

The invention relates to fluoroelastomer molded articles.

BACKGROUND ART

Known techniques to give luster to rubber products include a method of providing a metallic luster layer to the surface of a rubber product.

For example, Patent Literature 1 discloses a product with metallic luster including a substrate and, on the surface thereof, a base coat layer, a porous metallic luster layer, and a middle coat layer and/or a top coat layer in the given order. This product is a silicone rubber product with metallic luster in which the substrate is made of silicone rubber, the base coat layer is formed from a resin having at least elasticity, the middle coat layer and/or the top coat layer are/is formed from a resin having at least translucency and elasticity, and an adhesion-improved layer for the base coat layer, which tolerates elastic deformation of the silicone rubber substrate, is present between the surface of the silicone rubber substrate and the base coat layer.

Unfortunately, the metallic luster layer has poor flexibility, which may impair the flexibility which is inherent to the silicone rubber product and may cause separation of the metallic luster layer when the silicone rubber product is repeatedly expanded and contracted.

Patent Literature 2 discloses a metallic lustrous rubber product having metallic luster, flexibility, and elasticity and containing 100 parts of a transparent organic peroxide-crosslinkable rubber, 0.1 to 10 parts of metal powder having metallic luster, and 0.1 to 7 parts of an organic peroxide inert to the metal powder.

CITATION LIST

- Patent Literature

Patent Literature 1: JP 2012-153113 A
Patent Literature 2: JP S57-172938 A

SUMMARY OF INVENTION

- Technical Problem

No technique has been known that gives luster to a fluoroelastomer molded article. Fluoroelastomers have excellent characteristics that the other elastomers do not have, such as heat resistance, oil resistance, and chemical resistance, but are more expensive than the other elastomers. In many cases, fluoroelastomer molded articles are used in applications that can enjoy these characteristics. Good appearance is usually unnecessary in these applications. Thus, no sufficient examination has been performed on techniques to improve the luster of fluoroelastomers.

In view of the above current state of the art, the invention aims to provide a fluoroelastomer molded article having luster and low odor permeation.

- Solution to Problem

Specifically, the invention relates to a fluoroelastomer molded article containing a fluoroelastomer and having luster.

The fluoroelastomer molded article preferably has a ratio (L*15/L*110) of an L* value at 15 degrees to an L* value at 110 degrees of 1.10 to 10.00 in the L*a*b* color system.

The fluoroelastomer molded article preferably has a ratio (20 degrees/60 degrees) of a 20-degree specular glossiness to a 60-degree specular glossiness of 0.10 to 0.70.

The fluoroelastomer molded article preferably has an odor index equivalent of 20 or lower relative to either curry or mustard.

The fluoroelastomer molded article also preferably has an odor index equivalent of 20 or lower relative to both curry and mustard.

The invention also relates to a fluoroelastomer composition containing a peroxide-crosslinkable fluoroelastomer,

a peroxide-crosslinking agent, a crosslinking aid, and a luster pigment.

- Advantageous Effects of Invention

The fluoroelastomer molded article of the invention has flexibility and mechanical strength which are inherent to fluoroelastomers, and also has luster and low odor permeation.

DESCRIPTION OF EMBODIMENTS

The invention will be specifically described hereinbelow.

The fluoroelastomer molded article of the invention has luster.

The term "luster" as used herein means that the surface of the fluoroelastomer molded article shines when irradiated with light as if metal reflects light. In other words, the articles having "luster" include articles having pearl- or metal-like luster.

The fluoroelastomer molded article of the invention preferably has a ratio (L*15/L*110) of the L* value at 15 degrees to the L* value at 110 degrees of 1.10 to 10.00, more preferably 1.15 to 5.00, still more preferably 1.20 to 4.00, in the L*a*b* color system.

The ratio (L*15/L*110) as used herein is also referred to as the flip-flop value.

The L*15 and L*110 values as used herein are measured using a multi-angle spectrophotometer respectively at an acceptance angle of 15 degrees and of 110 degrees in conformity with JIS Z8781. For a fluoroelastomer molded article having luster on part of the surface, such as having an aventurine texture, the fluoroelastomer molded article is cut or polished, for example, and only the portion having luster is used in the measurement.

The fluoroelastomer molded article of the invention preferably has a ratio (20 degrees/60 degrees) of the 20-degree specular glossiness to the 60-degree specular glossiness of 0.10 to 0.70, more preferably 0.20 to 0.70, still more preferably 0.30 to 0.70.

The 20-degree specular glossiness and the 60-degree specular glossiness as used herein are measured using a gloss meter respectively at an incidence angle of 20 degrees and of 60 degrees. For a fluoroelastomer molded article having luster on part of the surface, such as having an aventurine texture, the fluoroelastomer molded article is cut or polished, for example, and only the portion having luster is used in the measurement.

The fluoroelastomer molded article of the invention preferably has an odor index equivalent of 20 or lower relative to either curry or mustard. In the case of curry, the odor index equivalent is preferably 20 or lower, more preferably 18 or lower, still more preferably 15 or lower. In the case of mustard, the odor index equivalent is preferably 20 or lower, more preferably 19 or lower, still more preferably 18 or lower.

The fluoroelastomer molded article of the invention preferably has an odor index equivalent of 20 or lower, more preferably 19 or lower, still more preferably 18 or lower, particularly preferably 15 or lower, relative to both curry and mustard.

The odor index equivalent as used herein is obtainable by analyzing and quantifying the odor components using an electronic nose. The odor index equivalent is calculated by the following formula:

$$\text{Odor index equivalent} = 10 \times \log(\text{sum of odor concentrations of nine standard gases}).$$

The greater the value is, the stronger the odor is. In the formula, each odor concentration is calculated by the following formula:

$$\text{Odor concentration} = \text{concentration of target standard gas/odor detection threshold}.$$

The nine standard gases are hydrogen sulfide, sulfur-based gas, ammonia, amine-based gas, organic acid-based gas, aldehyde-based gas, ester-based gas, aromatic gas, and hydrocarbon-based gas.

The fluoroelastomer molded article of the invention contains a fluoroelastomer.

The fluoroelastomer is preferably a crosslinked fluoroelastomer obtainable by crosslinking a peroxide-crosslinkable fluoroelastomer because such a cross-linked fluoroelastomer itself has high transparency and can therefore lead to much better luster.

The peroxide-crosslinkable fluoroelastomer may be any fluoroelastomer containing a peroxide-crosslinking site. Examples of the peroxide-crosslinking site include, but are not limited to, an iodine atom and a bromine atom.

Examples of the peroxide-crosslinkable fluoroelastomer include vinylidene fluoride (VdF)/hexafluoropropylene (HFP) fluoroelastomers, VdF/HFP/tetrafluoroethylene (TFE) fluoroelastomers, TFE/propylene fluoroelastomers, TFE/propylene/VdF fluoroelastomers, ethylene/HFP fluoroelastomers, ethylene/HFP/VdF fluoroelastomers, ethylene/HFP/TFE fluoroelastomers, VdF/TFE/perfluoroalkyl vinyl ether (PAVE) fluoroelastomers, VdF/CTFE fluoroelastomers, and VdF/2,3,3,3-tetrafluoro-1-propene fluoroelastomers. Preferred is at least one fluoroelastomer selected from the group consisting of vinylidene fluoride (VdF)/hexafluoropropylene (HFP) fluoroelastomers, VdF/HFP/tetrafluoroethylene (TFE) fluoroelastomers, VdF/TFE/perfluoroalkyl vinyl ether (PAVE) fluoroelastomers, and VdF/2,3,3,3-tetrafluoro-1-propene fluoroelastomers. The fluoroelastomer preferably has a composition in which the proportion of the fluorine atoms is 64% by mass or more, more preferably 68% by mass or more, still more preferably 70% by mass or more. The proportion of the fluorine atoms can be determined by elemental analysis, for example.

The fluoroelastomer molded article of the invention preferably contains a luster pigment. Examples of the luster pigment include metallic luster pigments such as aluminum and brass; metallic luster pigments having pearl-like luster obtainable by coating the surface of natural mica or synthetic mica with titanium oxide; metallic luster pigments having pearl-like luster obtainable by coating the surface of aluminum oxide or flat glass pieces with titanium oxide; and metallic luster pigments having iridescence obtainable by finely cutting an iridescent film which is a laminate of a plurality of transparent resin layers.

In order to provide better luster to the fluoroelastomer molded article, the luster pigment is preferably at least one selected from the group consisting of titanium oxide-coated mica, iron oxide-coated mica, a glass substrate, glass flakes, and an iridescent film, more preferably at least one selected from the group consisting of titanium oxide-coated mica, iron oxide-coated mica, a glass substrate, and glass flakes.

Examples of the luster pigment containing titanium oxide-coated mica or iron oxide-coated mica include the Mearlin series, the MagnaPearl series, the Glacier series, the Lumina series, and the Lumina Royal series available from BASF Colors & Effects, the Ultimica series, the Twincle Pearl series, and the Pearl-Glaze series available from Nihon Koken Kogyo Co., Ltd., the Iriodin series, the Xirallic series, and the Pyrisma series available from Merck, and the Reflex series available from CQV Co., LTd. Particularly preferred are the MagnaPearl series, the Lumina series, and the Lumina Royal series available from BASF Colors & Effects and the Iriodin series available from Merk.

Examples of the luster pigment containing a glass substrate or glass flakes include the Firemist series available from BASF Colors & Effects, the Metashine series available from Nippon Sheet Glass Co., Ltd., and Axion available from CQV Co., Ltd.

Examples of the luster pigment containing an iridescent film include the Crystal series available from Sanyo Kasei Co., Ltd.

In order to achieve much better luster and mechanical strength, the luster pigment preferably has an average particle size of 1 to 500 μm, more preferably 2 to 300 μm. The average particle size can be determined by laser diffraction.

In order to achieve much better luster and mechanical strength, the amount of the luster pigment is preferably 0.1 to 25 parts by mass, more preferably 0.5 to 15 parts by mass, still more preferably 1 to 5 parts by mass, relative to 100 parts by mass of the crosslinked fluoroelastomer obtainable by crosslinking the fluoroelastomer.

The fluoroelastomer molded article may further contain any rubber other than the fluoroelastomer, such as silicone rubber, ethylene propylene rubber, chlorinated polyethylene rubber, isoprene rubber, acrylonitrile rubber, and butadiene rubber.

The amount of the rubber(s) other than the fluoroelastomer preferably falls within the range that does not impair the low odor permeation which is an effect of the invention. The fluoroelastomer molded article preferably has a mass ratio (fluoroelastomer/rubber(s) other than fluoroelastomer) of the fluoroelastomer to the rubber(s) other than the fluoroelastomer of 70/30 or higher, more preferably 80/20 or higher, still more preferably 90/10 or higher. Particularly preferably, the fluoroelastomer molded article contains no rubber other than the fluoroelastomer.

The fluoroelastomer molded article of the invention may further contain an additive. Examples of the additive include a filler, an acid acceptor, a processing aid, a plasticizer, a softening agent, an antioxidant, a colorant, a pigment, a stabilizer, an adhesive aid, a release agent, a conductivity-imparting agent, a thermal-conductivity-imparting agent, a surface non-adhesive agent, a tackifier, a flexibility-imparting agent, a heat resistance improver, a flame retarder, an ultraviolet absorber, an oil resistance improver, a blowing agent, a scorch inhibitor, a lubricant, an epoxy resin, and an antifouling property improver.

Examples of the filler include metal oxides such as titanium oxide, aluminum oxide, zinc oxide, and chromium(III) oxide; metal hydroxides such as magnesium hydroxide and aluminum hydroxide; carbonates such as magnesium carbonate, aluminum carbonate, calcium carbonate, and barium carbonate; silicates such as magnesium silicate, calcium silicate, sodium silicate, and aluminum silicate; sulfates such as aluminum sulfate, calcium sulfate, and barium sulfate; metal sulfides such as molybdenum disulfide, iron sulfide, and copper sulfide; and diatomite, asbestos, lithopone (zinc sulfide/barium sulfide), graphite, carbon fluoride, calcium fluoride, coke, quartz fine powder, talc, mica powder, wollastonite, carbon fiber, aramid fiber, a variety of whiskers, glass fiber, organic reinforcing agents, organic filler, polytetrafluoroethylene, mica, silica, celite, clay, and diatomite. Each of these may be used alone, or two or more of these may be mixed as appropriate.

The fluoroelastomer molded article of the invention may be formed from a luster compound (the fluoroelastomer composition to be described later). This luster compound before mixed with the luster pigment needs to have transparency so as to achieve excellent luster. In order to achieve this effect, the amount of filler needs to be reduced. Still, such reduction may cause poor strength properties of the resulting molded article, highly possibly causing defects in practical use. Accordingly, the filler is preferably one having high reinforcibility and not impairing the transparency of the compound or the molded article, such as fine silica or transparent magnesium carbonate. Examples of the fine silica include those molded by flame hydrolysis or a wet process.

Polytetrafluoroethylene serving as the filler has a refractive index close to that of the fluoroelastomer. Thus, the fluoroelastomer molded article preferably contains polytetrafluoroethylene and the luster pigment because such a fluoroelastomer molded article can have better mechanical strength without impairing the luster achieved by the luster pigment.

The amount of the filler is usually 0 to 200 parts by mass, preferably 0.5 to 100 parts by mass, more preferably 1 to 50 parts by mass, relative to 100 parts by mass of the crosslinked fluoroelastomer obtainable by crosslinking the fluoroelastomer. In order to achieve the luster, the fluoroelastomer composition after vulcanization needs to have transparency. Thus, the amount of the filler needs to fall within the range that enables the fluoroelastomer composition after vulcanization to maintain the transparency.

The fine silica is preferably fine silica having a small average primary particle size because such fine silica does not hinder the luster achieved by the luster pigment even when the fluoroelastomer molded article contains the luster pigment. The average primary particle size is preferably 3 to 500 nm, more preferably 5 to 100 nm.

The fluoroelastomer molded article may contain any of pigments such as black pigments (e.g., carbon black), red pigments, blue pigments (e.g., copper phthalocyanine), yellow pigments, green pigments, and purple pigments. The presence of these pigments can give colors different from the color developed by the luster pigment alone to the fluoroelastomer molded article.

The fluoroelastomer molded article of the invention may be produced from a fluoroelastomer composition. In other words, the fluoroelastomer molded article of the invention may be one formed from the fluoroelastomer composition.

The fluoroelastomer composition of the invention contains a peroxide-crosslinkable fluoroelastomer, a peroxide-crosslinking agent, a crosslinking aid, and a luster pigment. The fluoroelastomer composition containing these components can provide a fluoroelastomer molded article having luster, and also having flexibility and mechanical strength which are inherent to fluoroelastomers.

The peroxide-crosslinkable fluoroelastomer contained in the fluoroelastomer composition has high transparency and therefore does not impair the luster achieved by the luster pigment, so that it is more preferred than a fluoroelastomer crosslinkable by a different crosslinking system.

The peroxide-crosslinkable fluoroelastomer contained in the fluoroelastomer composition may be any fluoroelastomer containing a peroxide-crosslinking site. Examples of the peroxide-crosslinking site include, but are not limited to, an iodine atom and a bromine atom.

Examples of the peroxide-crosslinkable fluoroelastomer contained in the fluoroelastomer composition include vinylidene fluoride (VdF)/hexafluoropropylene (HFP) fluoroelastomers, VdF/HFP/tetrafluoroethylene (TFE) fluoroelastomers, TFE/propylene fluoroelastomers, TFE/propylene/VdF fluoroelastomers, ethylene/HFP fluoroelastomers, ethylene/HFP/VdF fluoroelastomers, ethylene/HFP/TFE fluoroelastomers, VdF/TFE/perfluoroalkyl vinyl ether (PAVE) fluoroelastomers, VdF/CTFE fluoroelastomers, and VdF/2,3,3,3-tetrafluoro-1-propene fluoroelastomers. Preferred is at least one fluoroelastomer selected from the group consisting of vinylidene fluoride (VdF)/hexafluoropropylene (HFP) fluoroelastomers, VdF/HFP/tetrafluoroethylene (TFE) fluoroelastomers, VdF/TFE/perfluoroalkyl vinyl ether (PAVE) fluoroelastomers, and VdF/2,3,3,3-tetrafluoro-1-propene fluoroelastomers. The fluoroelastomer preferably has a composition in which the proportion of the fluorine atoms is 64% by mass or more, more preferably 68% by mass or more, still more preferably 70% by mass or more. The proportion of the fluorine atoms can be determined by elemental analysis, for example.

Examples of the peroxide-crosslinking agent contained in the fluoroelastomer composition include organic peroxides. The peroxide-crosslinking agent is preferably one easily generating peroxy radicals in the presence of heat or a redox system. Examples thereof include 1,1-bis(t-butylperoxy)-3,5,5-trimethylcyclohexane, 2,5-dimethylhexane-2,5-dihydroxyperoxide, di-t-butylperoxide, t-butylcumyl peroxide, dicumyl peroxide, $\alpha,\alpha'$-bis(t-butylperoxy)-p-diisopropylbenzene, 2,5-dimethyl-2,5-di(t-butylperoxy)hexane, 2,5-dimethyl-2,5-di(t-butylperoxy)hexyne-3, benzoyl peroxide, t-butylperoxybenzene, 2,5-dimethyl-2,5-di(benzoylperoxy)hexane, t-butyl peroxymaleic acid, and t-butyl peroxy isopropyl carbonate. Preferred among these are dialkyl compounds. The type and amount of the peroxide-crosslinking agent are usually selected in accordance with factors such as the amount of active -O-O-and the decomposition temperature. The amount of the peroxide-crosslinking agent is preferably 0.1 to 10 parts by mass, more preferably 0.5 to 5 parts by mass, relative to 100 parts by mass of the fluoroelastomer.

The crosslinking aid contained in the fluoroelastomer composition may be a common crosslinking aid used for crosslinking of rubber, and is preferably triallyl isocyanurate (TAIC) or trimetallyl isocyanurate. The amount of the crosslinking aid is preferably 0.1 to 10 parts by mass, more preferably 0.5 to 7 parts by mass, still more preferably 1 to 5 parts by mass, relative to 100 parts by mass of the fluoroelastomer.

Examples of the luster pigment contained in the fluoroelastomer composition include metallic luster pigments such as aluminum and brass; metallic luster pigments having pearl-like luster obtainable by coating the surface of natural mica or synthetic mica with titanium oxide; metallic luster pigments having pearl-like luster obtainable by coating the surface of aluminum oxide or flat glass pieces with titanium oxide; and metallic luster pigments having iridescence obtainable by finely cutting an iridescent film which is a laminate of a plurality of transparent resin layers.

In order to provide a fluoroelastomer molded article having better luster, the luster pigment contained in the fluoroelastomer composition is preferably at least one selected from the group consisting of titanium oxide-coated mica, iron oxide-coated mica, a glass substrate, glass flakes, and an iridescent film, more preferably at least one selected from the group consisting of titanium oxide-coated mica, iron oxide-coated mica, a glass substrate, and glass flakes.

Examples of the titanium oxide-coated mica or the iron oxide-coated mica which may be contained in the fluoroelastomer composition include the Mearlin series, the MagnaPearl series, the Glacier series, the Lumina series, and the Lumina Royal series available from BASF Colors & Effects, the Ultimica series, the Twincle Pearl series, and the Pearl-Glaze series available from Nihon Koken Kogyo Co., Ltd., the Iriodin series, the Xirallic series, and the Pyrisma series available from Merck, and the Reflex series available from CQV Co., LTd. Particularly preferred are the MagnaPearl series, the Lumina series, and the Lumina Royal series available from BASF Colors & Effects and the Iriodin series available from Merk.

Examples of the glass substrate or the glass flakes which may be contained in the fluoroelastomer composition include the Firemist series available from BASF Colors & Effects, the Metashine series available from Nippon Sheet Glass Co., Ltd., and Axion available from CQV Co., Ltd.

Examples of the iridescent film which may be contained in the fluoroelastomer composition include the Crystal series available from Sanyo Kasei Co., Ltd.

In order to provide a fluoroelastomer molded article having much better luster and mechanical strength, the luster pigment contained in the fluoroelastomer composition preferably has an average particle size of 1 to 500 $\mu$m, more preferably 2 to 300 $\mu$m. The average particle size can be determined by laser diffraction.

In order to provide a fluoroelastomer molded article having much better luster and mechanical strength, the amount of the luster pigment contained in the fluoroelastomer composition is preferably 0.1 to 25 parts by mass, more preferably 0.5 to 15 parts by mass, still more preferably 1 to 5 parts by mass, relative to 100 parts by mass of the fluoroelastomer.

The fluoroelastomer composition may further contain any rubber other than the fluoroelastomer, such as silicone rubber, ethylene propylene rubber, chlorinated polyethylene rubber, isoprene rubber, acrylonitrile rubber, and butadiene rubber.

The amount of the rubber(s) other than the fluoroelastomer preferably falls within the range that does not impair the low odor permeation which is an effect of the invention. The fluoroelastomer composition preferably has a mass ratio (fluoroelastomer/rubber(s) other than fluoroelastomer) of the fluoroelastomer to the rubber(s) other than the fluoroelastomer of 70/30 or higher, more preferably 80/20 or higher, still more preferably 90/10 or higher. Particularly preferably, the fluoroelastomer molded article contains no rubber other than the fluoroelastomer.

The fluoroelastomer composition may further contain an additive. Examples of the additive include a filler, an acid acceptor, a processing aid, a plasticizer, a softening agent, an antioxidant, a colorant, a pigment, a stabilizer, an adhesive aid, a release agent, a conductivity-imparting agent, a thermal-conductivity-imparting agent, a surface non-adhesive agent, a tackifier, a flexibility-imparting agent, a heat resistance improver, a flame retarder, an ultraviolet absorber, an oil resistance improver, a blowing agent, a scorch inhibitor, a lubricant, an epoxy resin, and an antifouling property improver.

Examples of the filler which may be contained in the fluoroelastomer composition include metal oxides such as titanium oxide, aluminum oxide, zinc oxide, and chromium(III) oxide; metal hydroxides such as magnesium hydroxide and aluminum hydroxide; carbonates such as magnesium carbonate, aluminum carbonate, calcium carbonate, and barium carbonate; silicates such as magnesium silicate, calcium silicate, sodium silicate, and aluminum silicate; sulfates such as aluminum sulfate, calcium sulfate, and barium sulfate; metal sulfides such as molybdenum disulfide, iron sulfide, and copper sulfide; and diatomite, asbestos, lithopone (zinc sulfide/barium sulfide), graphite, carbon fluoride, calcium fluoride, coke, quartz fine powder, talc, mica powder, wollastonite, carbon fiber, aramid fiber, a variety of whiskers, glass fiber, organic reinforcing agents, organic filler, polytetrafluoroethylene, mica, silica, celite, clay, and diatomite. Each of these may be used alone, or two or more of these may be mixed as appropriate.

In order to improve the luster of the fluoroelastomer molded article, the fluoroelastomer composition is preferably as transparent as possible before mixed with the luster pigment. In order to achieve this, the amount of filler in the fluoroelastomer composition is preferably small. In contrast, in order to improve the strength properties of the fluoroelastomer molded article, the amount of filler in the fluoroelastomer composition is preferably large. Accordingly, the filler is particularly preferably one having high reinforcibility and not impairing the transparency of the fluoroelastomer composition before mixed with the luster pigment, such as fine silica or transparent magnesium carbonate. Examples of the fine silica include those molded by flame hydrolysis or a wet process.

Polytetrafluoroethylene is preferred as the filler because it has a refractive index close to that of the peroxide-crosslinkable fluoroelastomer and therefore does not impair the luster achieved by the luster pigment and can give much better mechanical strength to the resulting fluoroelastomer molded article.

The amount of the filler in the fluoroelastomer composition is usually 0 to 200 parts by mass, preferably 0.5 to 100 parts by mass, more preferably 1 to 50 parts by mass, relative to 100 parts by mass of the fluoroelastomer.

The fine silica which may be contained in the fluoroelastomer composition is preferably fine silica having a small average primary particle size because such fine silica does not impair the luster achieved by the luster pigment and can provide much better mechanical strength to the resulting fluoroelastomer molded article even when the fluoroelastomer molded article contains the luster pigment. The average primary particle size is preferably 3 to 500 nm, more preferably 5 to 100 nm.

Examples of the acid acceptor which may be contained in the fluoroelastomer composition include metal oxides such as calcium oxide, magnesium oxide, and lead oxide, metal hydroxides such as calcium hydroxide, and hydrotalcite. Each of these may be used alone, or two or more thereof may be mixed as appropriate. Preferred among these are calcium hydroxide, magnesium oxide, and hydrotalcite.

The amount of the acid acceptor which may be contained in the fluoroelastomer composition is preferably 0 to 200 parts by mass, more preferably 0.1 to 20 parts by mass, still more preferably 0.1 to 10 parts by mass, relative to 100 parts by mass of the fluoroelastomer.

Adding any of various pigments in addition to the luster pigment to the fluoroelastomer composition can change the color of the resulting fluoroelastomer molded article from the original color of the luster pigment to a different color. For example, adding a small amount of any of pigments such as black pigments (e.g., carbon black), red pigments, blue pigments (e.g., copper phthalocyanine), yellow pigments, green pigments, and purple pigments can effectively change the color.

The fluoroelastomer composition may be produced by kneading the peroxide-crosslinkable fluoroelastomer, the peroxide-crosslinking agent, the crosslinking aid, and the luster pigment, optionally together with any of the additives. The kneading may be performed using a rubber kneading device such as a roll, a kneader, a Banbury mixer, an internal mixer, or a twin-screw extruder.

In the kneading, a composition (masterbatch) of the luster pigment in a condensed form and any filler may be used for the fluoroelastomer in advance.

The fluoroelastomer molded article obtainable from the fluoroelastomer composition also has luster as well as flexibility and mechanical strength which are inherent to fluoroelastomers.

The fluoroelastomer molded article of the invention may be produced by molding the fluoroelastomer composition and crosslinking the resulting molded article, or may be produced by simultaneously performing the molding and the crosslinking. Examples of the molding method include, but are not limited to, compression molding, extrusion molding, transfer molding, and injection molding.

The crosslinking may be performed by, for example, a method in which the molded article is heated at 140°C to 200°C for 3 to 120 minutes, i.e., subjected to primary crosslinking, and then heated at 150°C to 250°C for 0.5 to 48 hours, i.e., subjected to secondary crosslinking.

The fluoroelastomer molded article of the invention has a feature of low odor permeation in comparison with the rubber product disclosed in Patent Literature 2. Thus, the fluoroelastomer molded article of the invention is significantly suitable for applications of wearable articles to be in direct contact with the skin of a person and applications of kitchenware to be in contact with foods. For example, in the case of the fluoroelastomer molded article used in the kitchenware field, odors of a variety of dishes in contact with the fluoroelastomer molded article less remain on the elastomer product itself and are expected not to transfer to the next ingredients in comparison with the case of silicone rubber products.

The fluoroelastomer molded article of the invention may be used in the fields of motor vehicles (including two-wheeled vehicles), sports, home appliances, stationery, miscellaneous goods, furniture, clothing, gardening, and building materials.

The fluoroelastomer molded article of the invention has luster, and thus may particularly suitably be used for protect covers for automobile seats, protect covers for bicycle saddles, interior parts of automobiles, protect sheets for furniture, kitchenware, belts for watches, belts for keeping articles (excluding watches) on the body, housings of portable electronic devices, and protect covers for portable electronic devices.

The fluoroelastomer molded article of the invention may also be used for the following applications:

interior of automobiles:
instrument panels, decorative panels, dashboard panels, cup holders, steering wheels, and armrests;
wearable articles:

smartwatches, smart bands, smart glasses, virtual reality (VR) devices, body-attachable articles, and other articles (e.g., cloth-attachable articles, ring-like articles);

eyeglasses:

nose pads and temples;

healthcare devices:

magnetic necklaces, magnetic bracelets, and magnetic adhesive bandages such as Pip Elekiban®;

electronic devices:

covers for smartphones, covers for tablet computers, and keyboards (and covers therefor);

earphones:

cables, ear hooks, and earpieces;

sports:

mats, shoes, diving masks, snorkels, diving gears, and fishing gears;

kitchenware:

spatulas, turners, bowls, steamers, pastry pans, food cups, rubber aprons for babies or nursing care, baby bottles, and pacifiers (containers, teats);

items for pets:

litter trays, feeding dishes, and collars; and

other applications:

buttons, wheel socks for wheelchairs, bags, eyelash curlers, hearing aids, grip parts of pens, rubber accessories, nonmagnetic rubber accessories for fashion applications, robot exteriors, robot (bending) cables, locker keys for public baths, and grips of golf clubs.

EXAMPLES

The invention will be described hereinbelow with reference to examples, but these examples are not intended to limit the invention.

The parameters in the examples were determined by the following methods.

(Chromaticity)

For a fluoroelastomer molded sheet obtained by the molding method to be described later, the chromaticity at an acceptance angle of 15 degrees and the chromaticity at an acceptance angle of 110 degrees of the smooth surface were determined using a multi-angle spectrocolorimeter (multi-angle spectrophotometer (model: MA6811, X-RITE) (trade name, spectrophotometer)) in conformity with JIS Z8781. Measurement light was applied at an angle of 45 degrees relative to the axis normal to the measurement target surface, and the light beams received by light receivers at the respective angles were analyzed to calculate the L* value, a* value, and b* value.

(Specular glossiness)

For a fluoroelastomer molded sheet obtained by the molding method to be described later, the 20-degree specular glossiness and the 60-degree specular glossiness of the smooth surface were determined using a gloss meter (model: Gloss Mobile GM-1, Suga Test Instruments Co., Ltd.) (trade name, gloss meter). The standard of the measured values is the primary standard surface described in JIS Z8741 "Specular glossiness - Methods of measurement", and the gloss meter has a light sensitivity corresponding to the D65 standard luminosity function in JIS Z8741.

(Odor permeation)

A fluoroelastomer molded sheet and a silicone rubber molded sheet obtained by the molding method to be described later were cut to prepare 2.5-cm-square samples. Each sample was immersed into curry (S&B Oishii curry medium hot, S&B Foods Inc.) or mustard (French's classic Yellow Mustard, French's), each are on the market, in a plastic bag at room temperature for 24 hours such that the whole sheet was submerged in the test liquid. The samples were then taken out and washed with an odorless detergent, and the water was wiped off. Each sample was enclosed in a 5-L sampling bag, which had been washed with high purity nitrogen gas twice, and 5 L of high purity nitrogen gas was charged thereinto. The workpieces were left for an hour. Then, each sample was transferred to a 2-L sampling bag for analysis, which had been washed in the same manner as above, and an electronic nose (FF-2020 S, Shimadzu Corp.) was connected to the bag. The odor components were analyzed, and were quantified as the odor index equivalent which is the sum of the odor concentrations of nine standard gases. The odor index equivalent is expressed by 10 x log. The greater the value is, the stronger the odor is. Each odor concentration was calculated by the following formula:

```
Odor concentration = concentration of target standard
gas/odor detection threshold.
```

The nine standard gases used were hydrogen sulfide, sulfur-based gas, ammonia, amine-based.gas, organic acid-based gas, aldehyde-based gas, ester-based gas, aromatic gas, and hydrocarbon-based gas.

(Vulcanization physical properties)

For a fluoroelastomer molded sheet obtained by the molding method to be described later, the sheet was formed into a #5 dumbbell and the tensile strength, elongation at break, and 100% modulus of the dumbbell were determined at 23°C and 500 mm/min using a tensile tester (TENSILON RTG-1310, A&D Co., Ltd.) in conformity with JIS K6251(1993). Also, in conformity with JIS K6253, the hardness (3 sec) was determined using a type A durometer.

(Proportion of fluorine atoms)

The proportion of the fluorine atoms was determined by elemental analysis.

Examples 1 to 17 and Comparative Example 1

In accordance with the composition shown in Table 1, a luster fluoroelastomer compound containing a peroxide-crosslinkable iodine-containing fluoroelastomer (VDF/TFE/HFP copolymer) was prepared using a rubber roll. The resulting compound was press-molded at 170°C for six minutes to provide a sheet having a thickness of 1 mm, a length of 100 mm, and a width of 100 mm. The resulting sheet was further subjected to secondary vulcanization, specifically, heated in an oven at 180°C for two hours. The specular surface of this sheet was analyzed. The results of evaluating the odor permeation of the molded sheets obtained in Examples 2 and 9 are shown in Table 2.

Reference Example 1

First, 3 parts by mass of MagnaPearl 1000 (BASF Colors & Effects) was added to 100 parts by mass of a silicone rubber compound (SH 841 U, Dow Corning Toray Co., Ltd.), whereby a rubber compound was prepared. The resulting compound was press-molded into a sheet having a thickness of 1 mm, a length of 100 mm, and a width of 100 mm, and then subjected to secondary vulcanization. Thereby, a silicone rubber molded sheet was obtained. The results of evaluating the odor permeation are shown in Table 2.

Reference Example 2

A silicone rubber molded sheet was obtained in the same manner as in Reference Example 1, except that 3 parts by mass of Lumina Royal Copper 9390H (BASF Colors & Effects) was added to 100 parts by mass of the silicone rubber compound (SH 841 U, Dow Corning Toray Co., Ltd.). The results of evaluating the odor permeation are shown in Table 2.

The luster pigments used in the examples are the following pigments available from BASF Colors & Effects.

Titanium oxide-coated mica

MagnaPearl 1000
MagnaPearl 4000
Lumina Royal Blue 9680H
Lumina Royal Magenta 9480H

Iron oxide-coated mica
Lumina Royal Copper 9390H
Mixture of titanium oxide-coated mica and iron oxide-coated mica
Lumina Royal Dragon Gold EH0908
Titanium oxide-coated glass flakes

Metashine GT1080 RY
Metashine GT1080 RR

Metashine GT5600 RR

Iron oxide-coated glass flakes
Metashine GT1080 TA
Silver-coated glass flakes

Metashine MC5090 PS
Metashine MC2080 PS

Surface-treated glass flakes
Metashine GT1080 ZR

[Table 1]

| | | Example 1 | Example 2 | Example 3 | Example 4 | Example 5 | Example 6 | Example 7 | Example 8 | Example 9 | Example 10 | Example 11 | Example 12 | Example 13 | Example 14 | Example 15 | Example 16 | Example 17 | Comparative Example 1 |
|---|---|---|---|---|---|---|---|---|---|---|---|---|---|---|---|---|---|---|---|
| Iodine-containing fluoroelastomer (proportion of fluorine atoms: 70.5% by mass) | Parts by mass | 100 | 100 | 100 | 100 | 100 | 100 | 100 | 100 | 100 | 100 | 100 | 100 | 100 | 100 | 100 | 100 | 100 | 100 |
| TAIC WH60 (Nihon Kasei Co., Ltd.) | Parts by mass | 3.7 | 3.7 | 3.7 | 3.7 | 3.7 | 3.7 | 3.7 | 3.7 | 3.7 | 3.7 | 3.7 | 3.7 | 3.7 | 3.7 | 3.7 | 3.7 | 3.7 | 3.7 |
| Perhexa 25B-40 (NOF Corp.) | Parts by mass | 1.7 | 1.7 | 1.7 | 1.7 | 1.7 | 1.7 | 1.7 | 1.7 | 1.7 | 1.7 | 1.7 | 1.7 | 1.7 | 1.7 | 1.7 | 1.7 | 1.7 | 1.7 |
| Aerosil R972 (Nippon Aerosil Co., Ltd.) | Parts by mass | 5 | 5 | 5 | 5 | 5 | 5 | 5 | 5 | 5 | 5 | 5 | 5 | 5 | 5 | 5 | 5 | 5 | 5 |
| MagnaPearl 1000 | Parts by mass | 1 | 3 | 5 | | | | | | | | | | | | | | | |
| MagnaPearl 4000 | Parts by mass | | | | 3 | | | | | | | | | | | | | | |
| Lumina Royal Blue 9680H | Parts by mass | | | | | 3 | 3 | 3 | | | | | | | | | | | |
| Lumina Royal Magenta 9480H | Parts by mass | | | | | | | | 3 | | | | | | | | | | |
| Lumina Royal Copper 9390H | Parts by mass | | | | | | | | | 3 | | | | | | | | | |
| Lumina Royal Dragon Gold EH0908 | Parts by mass | | | | | | | | | | 3 | | | | | | | | |
| Metashine GT1080RY | Parts by mass | | | | | | | | | | | 3 | | | | | | | |
| Metashine GT1080RR | Parts by mass | | | | | | | | | | | | 3 | | | | | | |
| Metashine GT5600RR | Parts by mass | | | | | | | | | | | | | 3 | | | | | |
| Metashine GT1080ZR | Parts by mass | | | | | | | | | | | | | | 3 | | | | |
| Metashine GT1080TA | Parts by mass | | | | | | | | | | | | | | | 3 | | | |
| Metashine MC5090PS | Parts by mass | | | | | | | | | | | | | | | | 3 | | |
| Metashine MC2080PS | Parts by mass | | | | | | | | | | | | | | | | | 3 | |
| Carbon black | Parts by mass | | | | | | 0.02 | | | | | | | | | | | | |
| Copper phthalocyanine | Parts by mass | | | | | | | 0.02 | | | | | | | | | | | |
| Chromaticity of vulcanized sheet (D65/10°) | | | | | | | | | | | | | | | | | | | |
| Acceptance angle 15 degrees | L* | 120.68 | 123.95 | 132.07 | 115.13 | 98.79 | 69.72 | 79.16 | 96.49 | 73.67 | 108.81 | 109.5375 | 94.0425 | 75.5675 | 74.775 | 59.755 | 49.7675 | 48.095 | 66.22 |
| | a* | 0.93 | 0.18 | 0.18 | 0.03 | 15.79 | 26.25 | -0.06 | 25.80 | 46.31 | -0.72 | -0.1575 | 23.0975 | 16.555 | 47.1025 | 54.275 | 7.405 | 2.705 | -4.61 |
| | b* | 11.11 | 4.24 | 4.24 | 4.67 | -49.87 | -75.43 | -67.70 | -7.56 | 45.23 | 56.81 | 24.1625 | 18.4725 | 10.6875 | -2.2025 | 23.8125 | 11.2325 | 9.8775 | 10.06 |
| Acceptance angle 110 degrees | L* | 70.39 | 72.40 | 71.08 | 71.81 | 73.97 | 30.64 | 47.25 | 74.31 | 25.70 | 50.23 | 66.15 | 70.835 | 63.28 | 40.47 | 19.3175 | 33.5775 | 30.46 | 67.66 |
| | a* | -1.18 | 0.82 | 1.12 | 0.28 | -2.48 | 0.19 | -26.91 | -2.25 | 25.82 | 13.28 | -2.0325 | -1.55 | -2.3025 | 13.025 | 24.39 | 4.68 | 4.8425 | -4.31 |
| | b* | 8.23 | 8.23 | 7.55 | 6.98 | 12.32 | -8.58 | -29.37 | 10.70 | 20.92 | 29.22 | 5.7525 | 8.7525 | 6.1375 | -6.125 | 16.36 | 3.975 | 4.835 | 11.93 |
| Flip-flop (FF) value | L value (15 degrees)/L galue (110 degrees) | 1.71 | 1.71 | 1.86 | 1.60 | 1.34 | 2.28 | 1.68 | 1.30 | 2.87 | 2.17 | 1.66 | 1.33 | 1.19 | 1.85 | 3.09 | 1.48 | 1.58 | 0.98 |
| Glossiness of vulcanized sheet | | | | | | | | | | | | | | | | | | | |
| Glossiness | 20 Degrees | 45.07 | 32.50 | 33.83 | 23.23 | 23.97 | 22.57 | 23.33 | 24.70 | 35.30 | 45.03 | 49.17 | 27.67 | 28.20 | 29.93 | 24.17 | 30.63 | 24.57 | 45.27 |
| | 60 Degrees | 73.63 | 70.17 | 63.23 | 55.13 | 53.90 | 48.47 | 50.00 | 56.87 | 64.87 | 70.27 | 79.03 | 57.93 | 56.50 | 62.07 | 53.00 | 54.90 | 56.27 | 57.07 |
| Ratio of glossinesses | 20 Degrees/60 degrees | 0.61 | 0.46 | 0.54 | 0.42 | 0.44 | 0.47 | 0.47 | 0.43 | 0.54 | 0.64 | 0.62 | 0.48 | 0.50 | 0.48 | 0.46 | 0.56 | 0.44 | 0.79 |
| Vulcanization physical properties | 100% Modulus (MPa) | - | 2.6 | - | - | - | - | - | - | 2.4 | - | - | - | - | - | - | - | - | - |
| | Tensile strength (MPa) | - | 25.4 | - | - | - | - | - | - | 24.7 | - | - | - | - | - | - | - | - | - |
| | Elongation at break (%) | - | 411 | - | - | - | - | - | - | 392 | - | - | - | - | - | - | - | - | - |
| | Hardness (3 sec) | - | 64 | - | - | - | - | - | - | 62 | - | - | - | - | - | - | - | - | - |

[Table 2]

| Odor permeation | | Example 2 | Example 9 | Reference Example 1 | Reference Example 2 |
|---|---|---|---|---|---|
| | Nitrogen gas alone | | | | |
| Curry | 0.0 | 3.9 | 6.7 | 22.4 | 22.8 |
| Mustard | | 4.1 | 4.1 | 20.7 | 21.2 |
| Odor index equivalent | | | | | |

**Claims**

1. A fluoroelastomer molded article comprising a fluoroelastomer,
   the fluoroelastomer molded article having luster.

2. The fluoroelastomer molded article according to claim 1,
   wherein the fluoroelastomer molded article has a ratio (L*15/L*110) of an L* value at 15 degrees to an L* value at 110 degrees of 1.10 to 10.00 in the L*a*b* color system.

3. The fluoroelastomer molded article according to claim 1 or 2,
   wherein the fluoroelastomer molded article has a ratio (20 degrees/60 degrees) of a 20-degree specular glossiness to a 60-degree specular glossiness of 0.10 to 0.70.

4. The fluoroelastomer molded article according to claim 1, 2, or 3,
   wherein the fluoroelastomer molded article has an odor index equivalent of 20 or lower relative to either curry or mustard.

5. The fluoroelastomer molded article according to claim 1, 2, or 3,
   wherein the fluoroelastomer molded article has an odor index equivalent of 20 or lower relative to both curry and mustard.

6. A fluoroelastomer composition comprising:

   a peroxide-crosslinkable fluoroelastomer;
   a peroxide-crosslinking agent;
   a crosslinking aid; and
   a luster pigment.

## INTERNATIONAL SEARCH REPORT

International application No.

PCT/JP2017/034881

A. CLASSIFICATION OF SUBJECT MATTER
C08L27/12(2006.01)i, C08K3/40(2006.01)i, C08K7/00(2006.01)i,
C08K9/02(2006.01)i

According to International Patent Classification (IPC) or to both national classification and IPC

B. FIELDS SEARCHED

Minimum documentation searched (classification system followed by classification symbols)
C08L1/00-101/14, C08K3/00-13/08

Documentation searched other than minimum documentation to the extent that such documents are included in the fields searched
Published examined utility model applications of Japan      1922-1996
Published unexamined utility model applications of Japan    1971-2017
Registered utility model specifications of Japan            1996-2017
Published registered utility model applications of Japan    1994-2017

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| Y | JP 2015-163664 A (DAIKIN INDUSTRIES, LTD.) 10 September 2015, claim 1-7, paragraphs [0007]-[0008], [0056], [0068]-[0085], embodiments 1-36 (Family: none) | 1-6 |
| Y | JP 2003-49091 A (TOYO ALUMINUM K.K.) 21 February 2003, claim 9, paragraphs [0011], [0052], [0085], embodiments 1-4 (Family: none) | 1-6 |

☒ Further documents are listed in the continuation of Box C.  ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| | |

| Name and mailing address of the ISA/ Japan Patent Office 3-4-3, Kasumigaseki, Chiyoda-ku, Tokyo 100-8915, Japan | Authorized officer |
| | Telephone No. |

Form PCT/ISA/210 (second sheet) (January 2015)

**INTERNATIONAL SEARCH REPORT**

International application No.

PCT/JP2017/034881

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2011-42714 A (MITSUBISHI CABLE INDUSTRIES, LTD.) 03 March 2011, claims 1-3, paragraphs [0010], [0016], [0043], embodiments 1-6 (Family: none) | 1-6 |
| A | JP 8-48843 A (NIPPON PIGMENT CO., LTD.) 20 February 1996 (Family: none) | 1-6 |
| A | JP 8-48863 A (NIPPON PIGMENT CO., LTD.) 20 February 1996 (Family: none) | 1-6 |
| A | JP 2015-230351 A (MITSUBISHI PLASTICS, INC.) 21 December 2015, paragraph [0096] (Family: none) | 1-6 |
| A | JP 2001-271220 A (KUREHA CHEMICAL INDUSTRY CO., LTD.) 02 October 2001, & WO 2001/071071 A1 | 1-6 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012153113 A
- JP S57172938 A